# EUROPEAN PATENT APPLICATION

(11) **EP 1 310 930 A1**
(43) Date of publication of application: **14.05.2003**
(21) Application number: 01204293.3
(22) Date of filing: 09.11.2001
(51) Int. Cl.: G08G 1/0968, G08G 1/09, G08G 1/00, G08G 1/127

(54) **Traffic management system and method with an incentive scheme**

(71) Applicant: 3M Innovative Properties Company, Saint Paul, MN 55133-3427 (US)
(72) Inventor: Doeller, Claus, c/o 3M Laboratories (Europe), 41453 Neuss (DE); Kisilowski, Bernd, c/o 3M Laboratories (Europe), 41453 Neuss (DE); Russ, Georg, c/o 3M Laboratories (Europe), 41453 Neuss (DE)
(74) Representative: Bird, William Edward

(57) **Abstract**

A traffic management system is disclosed in which a traffic entity such as a vehicle or its user is offered one or more diversions to get around a permanent or temporary trouble spot. So as to entice users to take a diversion under offer, an incentive scheme is implemented in which a benefit is credited if an offered diversion is taken.

## Description

### Field of the invention

The present invention relates to traffic management systems and methods and in particular to a traffic management arrangement and method which includes the provision of one or more diversions from a travel route.

### Background to the invention

It has long been the practice to provide vehicle users with travel information, for example by radio broadcast of traffic jams and road works. If this is done over a very large area, it can either fill a radio station's broadcast time with nothing but travel information or may be so generalized that it too sparse for detailed route planning. It is often difficult for a driver to understand the relevance of a traffic warning particularly when the driver is in an unknown territory. With the ever increasing traffic density faced by the modern motorist, it is becoming more common to provide travel information to vehicle users in a selective manner, such that information is more local and therefore appropriate to that user. Simple implementation of this selective travel information are the broadcasts made by local radio stations. Even these may cover a wide area and swamp a user with information irrelevant to their intended or selected route, perhaps resulting in them mentally switching off to irrelevant information and then missing the parts that they would actually want to hear.

A further problem with some traditional travel information services is that a user must have their radio switched on and tuned into an appropriate radio station. Although known automatic tuning systems alleviate the need for re-tuning and can track a radio station across an area and/or tune in to the strongest local signal, users may not wish to have their radio on all the time and may only be interested in finding out about travel difficulties which lie ahead of them.

By way of improvement, systems now exist which automatically provide a user with local traffic information from several sources and which can be set such that the radio is mute except when travel information is being broadcast. Whenever any of the sources broadcasts travel information, the muting is temporarily suppressed while the travel information is being broadcast. In the alternative, the system can be set such that while the radio is playing, whatever radio station is currently selected, its broadcast is temporarily interrupted whenever any of the associated sources sends out travel information.

One prior art arrangement in which digital data can be transmitted inaudibly and in parallel with radio programs is the Radio Data System (RDS). Besides receiving radio signals, receivers equipped with an RDS decoder can receive and decode transmitted data using the same receiving part. The data transmission takes place in groups, a specific service being assigned to each group. One group in particular is provided specifically for the transmission of digitally coded traffic messages.

To make proper use of the traffic reporting channel, RDS messages are received selectively in accordance with predefined criteria. This arrangement is known in the art as the Traffic Management Channel (TMC) and decodes, stores and outputs the traffic messages. Basic RDS/TMC systems can still cause dissatisfaction if a user is swamped with a multitude of broadcasts relating to situations outside their area of interest and might result in a user simply not switching the system on. One proposal for an improvement to the basic RDS/TMC set-up is disclosed in EP 0790719, in which an attempt is made to filter messages for more route specific information.

Further improvements to traffic management are provided by route guidance systems, amongst which a current variation can be grouped generally as those implemented using the Global Positioning System. Many GPS systems provide vehicle location reporting and travel information supplied in accordance with the current vehicle position. One prior art example of this type of arrangement is disclosed in US 5,886,650, in which it is proposed to provide travel directions to a user in line-of-sight by means of icons on a display unit.

In US 5,933,094 it is proposed to link an auto-navigator system, e.g. GPS based, with an RDS/TMC arrangement. The proposal is to provide improved selection of traffic broadcasts, i.e. filtering out those which are not relevant on the route to a selected destination. Route planning by the auto navigator may also be based at least in part on the received RDS/TMC messages.

The provision of travel information alone, however, does not always help a user get around travel difficulties such as road works, vehicle accidents or traffic jams. It merely tells them that these exist and where they are. Long term problems can be taken account of during route planning, although this depends very much on the quality of information supplied by the service provider. A problem may certainly arise where short term traffic difficulties suddenly occur. Under certain such circumstances a user may find himself/herself approaching or on an obstructed route, perhaps in a foreign country and without much warning and without the ability or time to effectively plan a detour around the problem. This could be exacerbated if the route is part of a toll network, e.g. where the journey may have been prepaid or the route selected to keep toll costs down.

To alleviate this problem, systems have been proposed which generate detours so as to deviate from the selected/intended route either temporarily or for the rest of that journey. One such proposal is disclosed in US 6118389, in which detours can be generated after the initial route has been set.

A further navigation system which deals with route deviation is disclosed in EP1030280, in which one or more detours/diversions from a previously implemented route are automatically generated and presented to a user for them to make a choice.

While it is known to provide a system which can offer a user a detour around a potential traffic delay, the user may have chosen to switch the system off once they have seen the initial route, perhaps if it looked straight forward such as essentially a motorway from one end of a country to the other.

For certain business users for whom time is money, a vehicle waiting in a traffic jam may be costing them at least as dearly as one which has broken down. Also, some servicing is performed on the basis of hours running time, e.g. engines running cooling plant on a refrigeration lorry, and that time ticks away unproductively in a traffic jam. If the drivers, however, are being paid by the hour (or even on a fixed salary with the prospect of overtime) or are limited by the number of hours they can spend on the road, they may find it more attractive to sit in a traffic jam earning money while sitting still rather than taking a detour and getting back in time for more work.

Another example might be a fleet operator who wants its vehicles back as soon as possible for the next client. Take for example the case of a car hire fleet at an airport which has customers waiting for the vehicles. The previous hire customer may be early for their plane and may not consider it necessary to take a diversion and end up sitting in a crowded departure lounge. If a taxi-cab meter is running, however, the driver may be happy to sit in traffic whereas his fare will want him to get a move on.

These are personal and human considerations, but the environmental cost of inefficient vehicle usage and the associated need to keep vehicles moving and avoid stationary traffic should also be remembered. For example, a vehicle which is moving is using only part of its total power to keep the momentum going. Its engine management system is likely to be nearer to a steady state condition in which fuelling and catalyst control are at high efficiency, with the additional possibility of using lean burn portions of a fuelling strategy or operating using cylinder disablement so as to effectively reduce the capacity of the engine to only that necessary for cruising.

In contrast, however, a vehicle which is constantly pulling away and stopping needs to keep generating high power to pull away and then losing the momentum perhaps only a few meters further down the road and having to do it all again only a few seconds later. It is also likely to be operating much more under transient fuelling conditions with a resultant increase in emissions. Furthermore, vehicles which are under idle speed control or in slow moving traffic may have problems maintaining their catalytic converters at or above light-off temperature. To maintain or regain catalyst light-off under such circumstances, it is known to inject more fuel into the engine, even though the vehicle may be more or less stationary. An alternative is to employ some other form of catalyst heating, such as an electrical heating element, but that still requires the generation of electrical power which often comes from increased engine output and hence more fuel used.

The inefficient use of fuel and increased wear and tear of stop-start traffic clearly point to the need to continually develop and improve ways of keeping traffic moving. This problem affects many aspects of the cost and efficiency of our modern transport systems, for environmental reasons and vehicle users alike.

It is an object of the present invention to provide an improved traffic management arrangement and method for the provision of one or more diversions from a travel route.

### Summary of the invention

Accordingly, the present invention provides a traffic management system for a travelling traffic entity associated with a user, the system comprising:
travel information means which determines traffic information present on one or more routes in a geographic area,
means for providing to the travelling traffic entity under predetermined conditions a representation of one or more options for route diversion, and control means for implementing an incentive scheme, under which incentive scheme one of said travelling traffic entity and said user thereof is credited with a benefit if said travelling traffic entity commits to a route including a diversion defined by said representation.

Said travel information means may determine information about a journey of said travelling traffic entity. Said representation may be provided to at least one of said travelling traffic entity and a said user by means of an offer message to a message center, for example by one or more of sign, voice or text messaging, said offer message including indications of at least one diversion and the or each associated said incentive. Said offer message may comprise a diversion portion indicative of the or each diversion being offered and an incentive portion indicative of the or each associated said incentive, said incentive portion being released to said travelling traffic entity or said user only if entry to said incentive scheme is permitted by a provider of said incentive scheme. Permission to enter said incentive scheme may obtained by way of an acceptance message sent to a provider of said incentive scheme, sent for example in response to receipt of an offer message offering a said diversion.

Said benefit may be credited to a travelling traffic entity or said user only after receipt by said provider of a said acceptance message. Benefits may be accumulated by crediting a user account, for example by way of points accumulation in a benefit account, provision of redemption vouchers, a reduction in vehicle usage taxation, traffic toll accounting or by direct crediting of a user financial account such as a bank account. The award and/or level of benefit credited may variable in dependence on the circumstances under which a said diversion is executed by the travelling traffic entity, for example in dependence on a time period between a said diversion being offered and accepted or taken, in dependence on which of a plurality of offered diversions is taken or whether a said diversion is taken in full or in part. Said incentive scheme may be implemented in co-operation with a charging arrangement of a tolling system such as a road toll network. Said incentive scheme may be implemented in co-operation with travel information supplied via a traffic information network, such as for example a network employing a Radio Data System/Traffic Management Channel (RDS/TMC). Said system may further comprise a tracking means which is adapted to track whether and/or to what extent the travelling traffic entity executes a provided diversion, which tracking means preferably communicates with said control means such that a said benefit is credited only if predetermined conditions embedded in said incentive scheme surrounding the taking of a said diversion can be tracked as having been met. Said tracking means may comprise a vehicle position location arrangement, implemented for example using a vehicle tracker, a satellite tracking system such as the Global Positioning System (GPS), GLONASS or Eutelsat, by means of a barcode or by means of a communication device associated with at least one of said travelling traffic entity and said user. Said control means may compare the location of said travelling traffic entity with at least one provided diversion and access to said incentive scheme is only permitted if predetermined conditions matching said travelling traffic entity to said diversion are met. Said tracking may be performed only temporarily and only under circumstances in which the offer of a diversion is appropriate, such that for example user privacy of past journey history is maintained. Said tracking means may determine only the substantially instantaneous position of a said travelling traffic entity and only under circumstances in which the offer of a diversion is appropriate, such that for example user privacy of past journey history is maintained. Said tracking means may cease said tracking at the end of an executed diversion or if an offer of a said diversion and/or participation in said incentive scheme is rejected by said user or said travelling traffic entity, such that for example user privacy of future journey history is maintained. Said control means may include a plan of an intended route of said travelling traffic entity and access to said incentive scheme may then be controlled in dependence on the usefulness of a said diversion to said intended route. Said control means may include a plan of an intended route of said travelling traffic entity and access to said incentive scheme may then be permitted only if a journey associated with said route plan has started before a set of circumstances necessitating the offer of a said diversion have arisen. A record of accumulated said benefits is recorded in at least one of said travelling traffic entity, centrally such as at a provider of said incentive scheme or by communication between said control means and a storage means personal to a said user, such as in a smart card, personal data/computing device or cellular telephone. Said incentive scheme may be implemented substantially independently of national borders and/or language.

The present invention also provides a method of controlling traffic flow, including:
a) determining when diverting a travelling traffic entity within a geographic area will improve a traffic situation, (such as for example by reducing traffic congestion, shortening journey time or reducing a concentration of pollution);
b) determining one or more route diversions appropriate to improving said traffic situation;
c) providing to a travelling traffic entity or a user thereof a first representation of one or more route diversions; and
d) awarding to said travelling traffic entity or said user thereof a benefit if the travelling traffic entity commits to a diversion of the one or more diversions described by said first representation.

Separate embodiments of the present invention may include, for instance: storing in a memory device a second representation relating to the award of a said benefit, said memory device preferably comprising a non-volatile memory device or determining that the diversion has been successfully completed.

The method may include permitting entry of said travelling traffic entity or of said user thereof to an incentive scheme administered for the award of said benefits only on receipt of an acceptance message which indicates that incentive scheme entry conditions have been fulfilled. The method may include transmitting one or more offer messages including at least said first representation to said travelling traffic entity. The method may include storing at least a part of said message for later release to said travelling traffic entity, preferably said part comprising said second representation, said later release being optional and preferably under the control of said incentive scheme provider. The method may include determining the location of the travelling traffic entity and releasing a said offer message, or stored part thereof, to said travelling traffic entity or the user thereof only if there is a predetermined match between the first representation of a diversion and a position of said travelling traffic entity. The method may include locating said travelling traffic entity using a tracking means, for example a vehicle tracker, a satellite tracking system such as the Global Positioning System (GPS), GLONASS or Eutelsat, by means of a barcode or by means of a communication device associated with at least one of said travelling traffic entity and said user. The method may include controlling said tracking centrally, such as for example through an incentive scheme provider. The method may include controlling said tracking locally to said travelling traffic entity. The method may include tracking said travelling traffic entity only temporarily during a time window in which an offer of a diversion is being made. The method may include ceasing said tracking on at least one of completion of a provided diversion and receipt by an incentive scheme provider of a message from said travelling traffic entity or said user rejecting said offer of a diversion and/or rejecting participation in said incentive scheme. The method may include transmitting a said offer message in at least two parts, a first part comprising said first representation of one or more diversions and a second part comprising details of an incentive associated with a said diversion. The method may include filtering said offer message such that diversions which are available are offered to said travelling traffic entity or said user thereof in a predetermined order of preference and/or such that diversions inappropriate to any particular journey are not offered. The method may include scaling the incentive offered to match the seriousness of said traffic situation for which relief is being attempted. Said scaling may be non-linear with the seriousness of said traffic situation. The method may include canceling the offer of a said benefit if said traffic situation eases such that the or each said diversions become redundant, preferably maintaining the participation in the incentive scheme of users who have been permitted entry thereto before said cancellation. The method may include crediting the award of benefits in a customer account, for example by way of accumulating points in a benefit account, providing redemption vouchers, crediting a reduction in vehicle usage taxation, crediting traffic toll accounting or by direct crediting of a user financial account such as a bank account. The method may include recording the accumulation of benefits in at least one of said travelling traffic entity, centrally such as at a provider of said incentive scheme or by communication with a storage means personal to a said user, such as in a smart card, personal data/computing device or cellular telephone. The method may include varying the award and/or level of benefit in dependence on the circumstances under which a said diversion is taken, for example in dependence on a time window between a said diversion being offered and accepted or taken, in dependence on which of a plurality of offered diversions is taken or whether a said diversion is taken in full or in part. The method may include implementing said incentive scheme in co-operation with a road toll network. The method may include implementing said incentive scheme in co-operation with travel information supplied via a traffic information network, such as for example a network employing a Radio Data System/Traffic Management Channel (RDS/TMC). The method may include implementing said incentive scheme substantially independently of national borders and/or language. Said memory device may include at least one of: a soft memory such as a computer memory, a smart card memory, a memory in a communications or personal organizer device, a programmable logic array (PLA), an electrically programmable and or erasable memory (EPROM / EEPROM), a CD-ROM, a diskette, a laser disc or a magnetic tape. Said memory device may be associated with the generation of a hard copy of a record of one or more said benefits, such as for example on a piece of paper, a printed out token, a voucher or a receipt. The method may include administering said memory device from a location independent from said travelling traffic entity, for example at a central control center of a provider of an incentive scheme associated with the award of a said benefit. The method may include administering said memory device locally in association with said travelling traffic entity, for example by storing said second representation in a said memory device on board said travelling traffic entity. The method may include presenting at least one of said first and second representations to a said user via a user interface associated with said memory device. Said user interface may include at least one of: an audio device such as for example a voice operated system and/or a speaker system; a mobile communications device; and a visual device such as for example an optical display device such as a light array, a display screen, a head-up-display (HUD) or a three dimensional display such as a holographic image. The present invention also provides methods of protecting against fraud in an apparatus according to the invention or in the implementation of a method according to the invention. One such method may include awarding benefits for a particular journey only if a route plan for said particular journey has been stored, preferably accessibly to a service provider of said benefits, and said journey has been commenced before an offer of a said diversion is at least one of necessitated and made. Another such method may include awarding no or reduced said benefits unless said travelling traffic entity is approaching an actual or potential said diversion only before an offer of a said benefit is at least one of necessitated or made. Another such method may include awarding no or reduced benefits if repeat approach is made by at least one of said travelling traffic entity and said user to an area in which a previous benefit has been offered or awarded for taking a said diversion. Another such method may include applying punitive measures against attempted or successful fraud, such as for example excluding a travelling traffic entity or user from an incentive scheme associated with said benefits or debiting one or more said benefits under predetermined circumstances. Another such method may include monitoring usage of a said travelling traffic entity to establish if its travel pattern is indicative of usage intended to maximize benefit collection, for example rather than efficient travel, and to take punitive action under such circumstances, such as temporary or permanent exclusion from the award of said benefits and/or debiting or canceling one or more previously awarded said benefits.

The present invention also provides a traffic management system which operates in accordance with the method of the invention.

The award of a said benefit may be made in such a manner that said benefit is accruable without journey history being recoverable, so as for example to maintain privacy.

### Brief description of the drawings

The present invention will now be described by way of example only and with reference to the accompanying schematic drawings, in which:
Figure 1 is a schematic diagram of a traffic management arrangement according to a first embodiment of the present invention;
Figure 2 is a schematic diagram of a traffic management arrangement according a second embodiment of the present invention;
Figure 3 is a schematic diagram of a traffic management arrangement according a third embodiment of the present invention;
Figure 4 is a high level flow chart of operation of a traffic management arrangement according to another embodiment of the present invention;
Figure 5 is a high level flow chart of operation of a traffic management arrangement according to a further embodiment of the present invention; and
Figure 6 is a high level flow chart of operation of a traffic management arrangement according to yet a further embodiment of the present invention.
Figure 7 is a high level flow chart of operation of a traffic management arrangement according to a further embodiment of the present invention.
Figure 8 is a schematic diagram of a traffic management arrangement according to a another embodiment of the present invention.
Figure 9 is a schematic diagram of a traffic management arrangement according to yet another embodiment of the present invention.

### Detailed description of preferred embodiments of the present invention

The present invention will be described with reference to certain embodiments and drawings but the present invention is not limited thereto but only by the claims. Generally, the present invention is based on conventional techniques of communication such as radio or infra-red telecommunications networks, satellite systems, optical fibre, microwave, wireline, coax cable or twisted pair networks in combination with computer systems. In particular, the incentive scheme proposed in the present invention may be a computer based scheme.

Referring to the figures, the present invention concerns the management of traffic and the flow control of those entities which form bodies of travelling traffic. Such travelling traffic entities need not simply be vehicles, as in some cases it may be found useful to separate the concept of a vehicle and the or each user/vehicle controller. In such cases, it may be found preferable to use a user such as a driver, passenger or owner/controller as a point of reference known as the travelling traffic entity. For example, in the case of fleet control, it is the fleet controller who decides where a vehicle/driver travels and not the vehicle itself or even necessarily the person driving it. Also, vehicles may travel in convoys so that the travelling traffic entity in accordance with the present invention may be more than one vehicle.

The reference point which defines a travelling traffic entity may advantageously comprise a device which can communicate with a traffic control system and be considered at least for the time being to be personal to a particular entity or possibly group of entities, for example a group of people or vehicles travelling together. Such a device can therefore be considered for the sake of reference as the entity rather than always referring to a user or the vehicle transporting the entity at any particular time.

In addition, to be travelling it is only considered necessary to be undertaking a journey or to be planning or about to do so, rather than actually moving. For example, any entity in a traffic jam or parked in a service area or lay-by is also considered to be travelling. Such vehicle/user/controller combinations are either part of or a potential contributor to congestion, whereas a vehicle parked in a garage is less so.

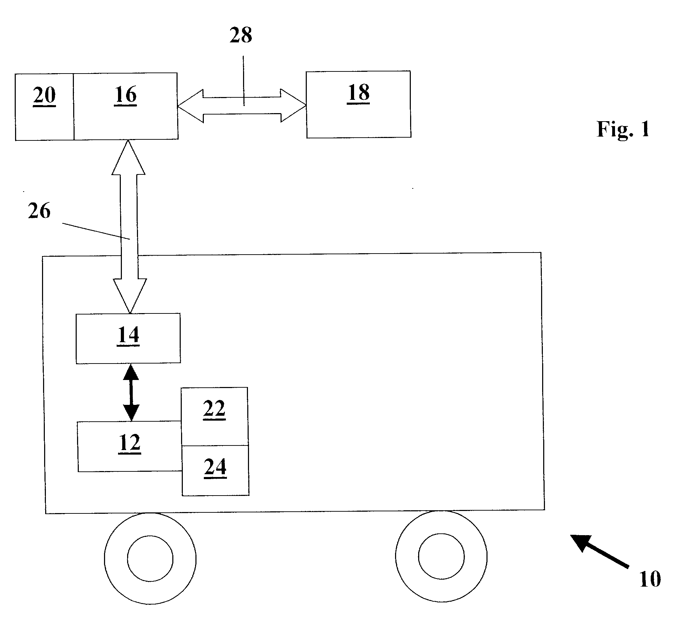

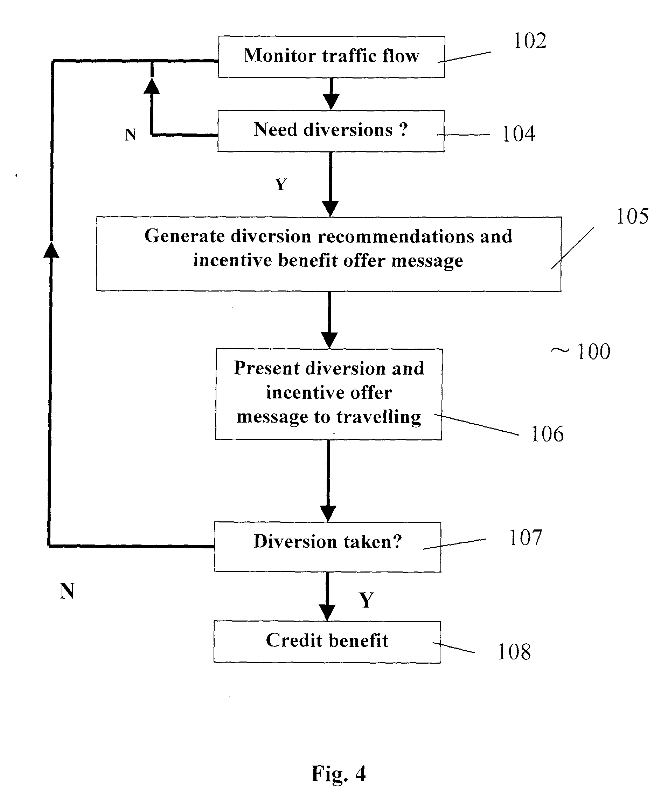

Referring now in particular to Figures 1 and 4, a first embodiment of the present invention will be described. A travelling traffic entity in the form of a vehicle 10 is provided with a user interface in the form of a message center 12. The message center 12 is associated with a travel information means in the form of a traffic management interface 14 and is adapted to provide to a vehicle user traffic management messages which are derived from a control means in the form of a traffic management service provider 16 via a communication channel 26. Beyond this basic arrangement, the message center 12 optionally includes a user input 22 and a local storage device 24.

Presentation of messages via the message center 12 includes the use of an integrated audio device such as a voice operated system and/or speaker system or a mobile communications device such as a mobile or cellular 'phone. In addition or in the alternative, the message center 12 may operate as a visual device, for example as an optical display such as a light array, a display screen, a head-up-display (HUD) or even a three dimensional display such as a holographic display.

The service provider 16 obtains traffic information from its own or a third party traffic monitoring service 18 via a further communication channel 28, which may conveniently comprise a radio data system/traffic management channel (RDS/TMC). The service provider 16 administers a memory device 20, which in the embodiment shown with respect to Figure 1 is held centrally at the service provider 16. The traffic management interface 14 may simply comprise an RDS/TMC receiver and the message center 12 may comprise an alpha-numeric or audio output thereof.

The service provider 16 monitors traffic flow (step 102 of Figure 4) from traffic broadcasts 18, 28 or a direct link to their providers and determines whether a traffic situation has arisen in one or more geographic areas which warrants relief by attempting to induce one or more vehicles 10 into suitable diversions so as to relieve congestion or improve traffic throughput in a known or temporary trouble spot (step 104). In step 106, diversion information is generated. Techniques for derivation and generation of diversions are known from, for example, EP 1030280. The service provider 16 can then provide to the vehicle 10 in step 106 via its message center 12 a first representation comprising one or more diversions. Such diversions can be filtered so as to ensure that they are appropriate for the users in a particular geographic area and such techniques are known from for example EP 0790719 and US 5,933,094. The transmissions can be encrypted with a code specific to the incentive scheme so as to maintain privacy and to distinguish from other services.

A traditional service provider has a problem, however, in that there is no provision to encourage a particular user/controller of any such vehicle 10 to actually take a diversion offered, as discussed in the introduction above. Under the present invention, the service provider 16 operates an incentive scheme to encourage the take-up of diversions under offer. Under the incentive scheme, the service provider 16 sends an offer message in step 106 through to the message center 12 which is indicative of a benefit which would be credited against one of the vehicle 10 or user if commitment is given to taking up the offer of the diversion.

In the simplest form of the present invention, no action is required in a vehicle or by other persons other than the ability to understand a message offering one or more diversions in such a way that the driver of the vehicle is able to take one or other diversion offered. The offer message can be displayed in a large variety of ways, all of which are included within the scope of the present invention. The offer message can, for instance be conveniently broadcast using RDS/TMC techniques already known and the core infrastructure needed to implement the present invention can thus be seen to be substantially already in place.

To monitor the take-up of the scheme in step 107, that is that a diversion which has been offered is actually taken, various techniques are described with reference to the present invention all of which are mebodiments of the present invention. In one version, the vehicle number plate could be monitored by camera with character recognition facilities, the camera being located at a point of entry into and/or out of the diversion. This ensures that the service provider has determined enough information about a particular journey of a particular vehicle to be able to implement the incentive scheme. An alternative way is to affix a simple marker device such as a barcode sticker to the roof of a vehicle participating in the scheme and to read these automatically using for example barcode readers on overhead gantries or bridges. Such stickers could, for example, be given free to promote the scheme or bought by participants who could, in either or both cases, be required to agree to scheme entry conditions such as anti-fraud clauses, examples of which are discussed in greater detail further below. The bar-code stickers could be made invisible but readable in infra-red or ultra-violet light. US 4,733,079 and US 4,795,906 propose a method of altering the infra-red reflection properties of a vehicle part to form a code and to detect these differences using an infra-red source and a detector.

It will be noted that such implementation allows for the scheme to be operated regardless of national borders or language barriers. It could be operated internationally and would allow for visitors from non-participating countries to take part in the scheme when visiting a country where the scheme was in force. It will also be appreciated that such monitoring of diversion take-up is only temporary and preserves privacy of prior journey history and, after completion of the diversion, future journey privacy is also maintained.

In such a basic implementation of the present invention, a record relating to accumulated benefits can be stored as a second representation centrally at the service provider 16 using the memory device 20, the memory device 20 preferably comprising a non-volatile memory such that accumulated benefits are not lost in the event of a service breakdown.

As it may be difficult to predict which one of several diversions a vehicle 10 may take, the offer message could be constructed in two parts, comprising the first and second representations respectively. The first representation (the diversions) would be presented immediately and the second representation (the benefit) would be stored in the message center 12 and only the actual benefit awarded released and then only on permission from the service provider 16 once satisfied that the diversion has been completed.

It is preferable that the benefits available are scaled, but not necessarily linearly, in relation to the seriousness of the traffic situation needing relief and/or in relation to the desirability of a plurality of diversions available. In this manner, the second representation of the actual benefit accrued can be presented to the message center 12 and stored in the memory 20 only once its value has been determined with certainty. In this way, a driver is not distracted by trying to work his way through a multitude of benefit offers whilst moving. It is, of course, possible to provide a simplified idea of benefits by presenting the diversions in an order of preference.

The basic arrangement can be modified by the optional inclusion of one or both of the user interface 22 and the local storage device 24. The user input 22 allows a driver/user to interact with the service provider and to select and/or accept any particular offer of a diversion by way of an acceptance message. It also provides the option to specifically drop out of the scheme at least temporarily, for example to maintain journey privacy.

The local storage device 24 can comprise a preferably non-volatile memory and enables local storage of accrued benefits, as well as potential ones for later release. This device 24 can be operated in conjunction with, or instead of, the memory 20 at the service provider 16. It can thus be seen that benefit information can be performed centrally 20 or locally 24 to the vehicle 10 or its user. The or each storage device 20/24 might conveniently comprise at least one of: a memory such as a computer memory, a smart card memory, a memory in a communications or personal organizer device, a programmable logic array (PLA), an electrically programmable and/or erasable memory (EPROM / EEPROM), a CD-ROM, a diskette, a laser disc or a magnetic tape. The storage devices may also be adapted to provide a hard copy of a record of one or more benefits accrued, such as for example on a piece of paper, a printed out voucher or a receipt. In the particular case of the local storage device 24, it may conveniently comprise or be associated with a communications device associated with a particular user, such as for example a mobile telephone or a smart card, maybe in co-operation with a road toll network.

How the benefits are redeemed is flexible. Any method of doing this is included within the scope of the present invention. They may, in a simple embodiment, be redeemed simply by visiting a redemption center. This could, for example, be a retail outlet and the benefits redeemed in kind from that outlet. Such a scheme would prove simple to implement due to its minimal hardware and driver interaction and could find willing retail partners who would benefit from knock on trade and favorable press from sponsorship of environmentally friendly projects. The advantage to the service provider 16 is, of course, that they do not need to provide any or little further infrastructure.

Benefit redemption can also be provided through, for example, crediting a customer account, for example by accumulating benefit points in a customer account, providing redemption vouchers, crediting a reduction in vehicle taxation, crediting traffic toll accounting or by direct crediting of a user financial account such as a bank account.

In order to provide confidence in journey privacy, it is considered preferable for benefit accumulation to be implemented without journey history being recoverable. This is regardless of whether the scheme is administered centrally at for example the service provider 16 or locally to the traffic entity 10.

In any case, further variations in benefit accumulation are available to the service provider 16. For example, the award or not of benefits, along with their level, can be variable in dependence on the particular circumstances under which any particular diversion is executed by the traffic entity. This can include dependence on a time period or window between one or more of the diversions being offered and accepted or taken, the difference between the time of acceptance and taking the diversion possibly being beyond the control of a particular traffic entity due to maybe being stuck in the very traffic jam being relieved. The level or award of benefit may also be varied to take account of the actual relief generated or anticipated by taking any one of the diversions and whether a diversion is taken in full or in part.

The incentive scheme may be implemented in co-operation with a road toll network, in which case there would already be an infrastructure available with minimal modification for determining vehicle position and which vehicles are on which road. In such an implementation, it is possible for the service provider to determine, e.g. from toll tickets purchased, at least a crude idea of a planned journey and the position of the vehicle 10. Entry to the incentive scheme of a particular traffic entity can then be controlled in dependence on the usefulness of the diversions under offer to that entity or the traffic in that area in general, e.g. by reducing traffic congestion, shortening journey times or by reducing pollution levels. This rough idea of a journey plan and vehicle position can also be used to control entry to the incentive scheme to only those potential participants whose journey started before a set of circumstances necessitating the offer of the diversions arose. This reduces the chances of potentially less than totally honest users monitoring traffic flow themselves using RDS/TMC and then rushing out to find a trouble spot purely so that they can accumulate benefits.

The service provider 16 can have the ability to cancel the offer of any one or more benefits if the traffic situation eases such that the or each diversion becomes redundant and potentially likely to cause a problem elsewhere. If the service provider 16 chooses to do this, however, it is preferable that participation in the scheme is maintained for those who committed to a diversion and preferably also took one before the situation had eased. Otherwise, the credibility of the scheme and the incentive provider 16 may be compromised.

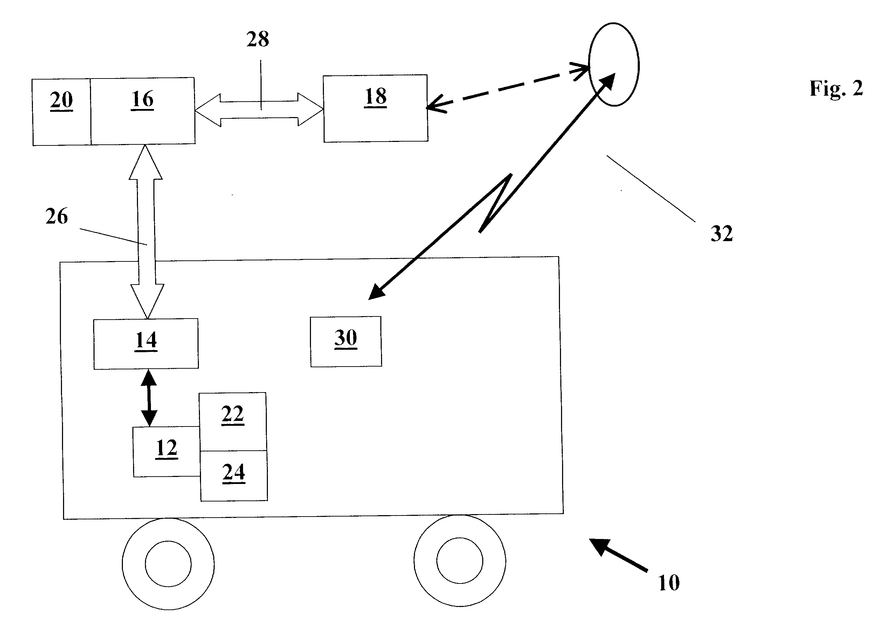

It will be appreciated that at least the above mentioned features of the incentive scheme of the present invention can be implemented with minimal vehicle/user hardware or interaction with the service provider. As such, the scheme can be open to a much wider group of potential participants than more sophisticated embodiments. Modern vehicle usage and personal communications and computing devices, however, are becoming more common place and further embodiments can take account and advantage of the increase in sophistication to implement a more robust and efficient incentive scheme for those so equipped. Some further non-limiting examples of such variations to the present invention will now be described with reference also to Figures 2, 3, 5 and 6, in which features which are substantially the same as or equivalent to the structure and/or operation of those of the embodiment of Figure 1 are given the same reference numerals.

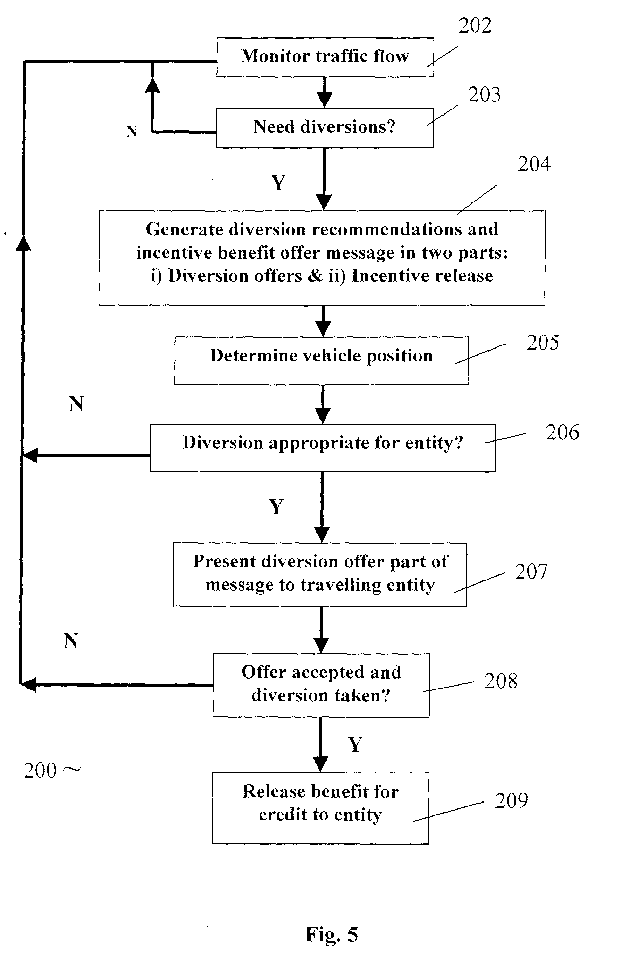

Referring now in particular to Figures 2 and 5, a second aspect of the present invention will be described. The arrangement of Figure 1 has been modified such that the vehicle 10 is now equipped with a tracking device in the form of a navigation system 30. The navigation system 30 is implemented using, for example, a satellite based system like the Global positioning System (GPS), GLONASS or an arrangement such as Eutelsat. The traffic management interface 14 either communicates with or is integrated with that navigation system 30. The tracking device need not necessarily be a navigation system 30, as other devices for tracking moveable objects such as vehicles or people are known.

Tracking allows the service provider and/or a user to determine more accurate information about a particular vehicle 10, its usage or user and can be employed to control their entry to the incentive scheme and their participation once in it. In similar fashion to the system of the first embodiment, tracking can be performed under centralized control of the service provider 16 or by local control in the vehicle 10. Information for either can be transferred directly between a satellite 32 and the navigation system 30, between the satellite 32 and the traffic information supplier 18 / service provider 16 or in co-operation between them 30, 32, 18, 16, 10.

Referring now also to the flow chart of Figures 5, it can be seen that the provision of a navigation system 30 introduces the ability to implement a more personal incentive scheme than that of the first embodiment by improving the determination of vehicle position. In step 202 traffic conditions are monitored as explained with reference to the previous embodiment and a need for diversions determined in step 203. In step 204 one or more diversions are generated to ease the traffic situation and each of these diversions can be associated with an incentive bonus. Alternatively, all incentives may be the same so that these do not need to be generated independently. In step 205 the position of the vehicle is determined and it is decided in step 206 if any diversion offered is relevant for this vehicle. In step 207 the diversion information and optionally the incentive information is displayed to the vehicle if this has been determined to be appropriate. In step 208 the diversion is accepted either by the driver taking the diversion and thus de facto accepting the incentive or by entry of an acceptance in the user interface 22. the acceptance may be transmitted to the service provider 16 or stored locally in the vehicle in memory 24. In either case the incentive benefit accrues to the user in step 209 after an optional release by the service provider that the diversion was genuinely taken.

While the embodiment of Figures 1 and 4 could be used to implement the scheme in accordance with the flow chart of Figure 5, the determination of vehicle position is vastly improved if a navigation system 30 is available and the filtering of diversions and/or benefits offered can also be subsequently improved. This further eases the storage and release of the incentive and can help reduce the temptation of a participant to hunt for the best diversion available with respect to benefit accumulation.

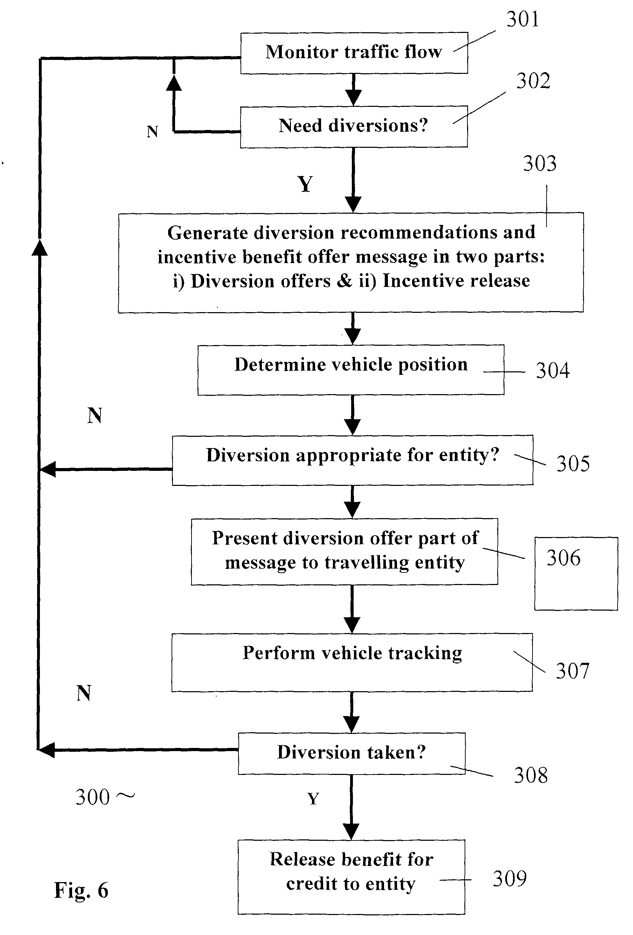

Referring now in particular to Figure 6, the performance of vehicle tracking can be used not only to specifically determine vehicle position for offer presentation, but also for tracking whether and to what extent a diversion has been taken. Steps 301 to 306 are identical to steps 2002 to 207 of Figure 5. In step 307 the vehicle is tracked to make sure the diversion is taken. Any suitable tracking system may be employed, e.g. via Eutelsat. The tracking may also be done from the vehicle; e.g. via a global positioning system. Tracking also allows accurate matching of a travelling entity to appropriate diversions and can be used to allow access to the incentive scheme only if predetermined entry conditions/participation rules embedded in the scheme or stipulated by a service provider 16 have been met in that matching. Also, tracking allows several diversions to be offered at the same traffic problem site. this is of importance when diversion of all traffic from a motorway would simply cause a traffic jam on downstream minor roads. To avoid this problem the diversions may be spread geographically to try and diffuse the traffic over a wide area. So for example, 10 different diversions may be offered at the same location to deal with one traffic problem. It is then necessary to track the vehicles to make sure that these diversion routes are actually taken.

Tracking by the service provider 16 is preferably performed only during a time window when a diversion is under offer, only performed temporarily and stopped on completion of a diversion or if a message is received by the service provider from the user interface 22 rejecting a diversion or participation in the incentive scheme. In addition, it may be found preferable to participants if tracking is only used to spot check periodically the substantially instantaneous position of the entity and to offer diversions only if appropriate. These measures provide confidence to participants in the scheme that their privacy is maintained for past, present and future journey history as appropriate. This may prove an important consideration for people such as celebrities or figures of authority who need such measures for, amongst other things, security.

Linking the implementation of the incentive scheme with navigation or tracking information allows a user to input a journey plan of an intended route made accessible to the service provider 16. Such a journey plan allows the best diversion filtering to be implemented. To help prevent fraudulent accumulation of benefits, a service provider 16 would prevent access to the incentive scheme if the journey plan was submitted or the journey started after sufficient warning had been given of trouble on the intended route and an alternative route had possibly been proposed already.

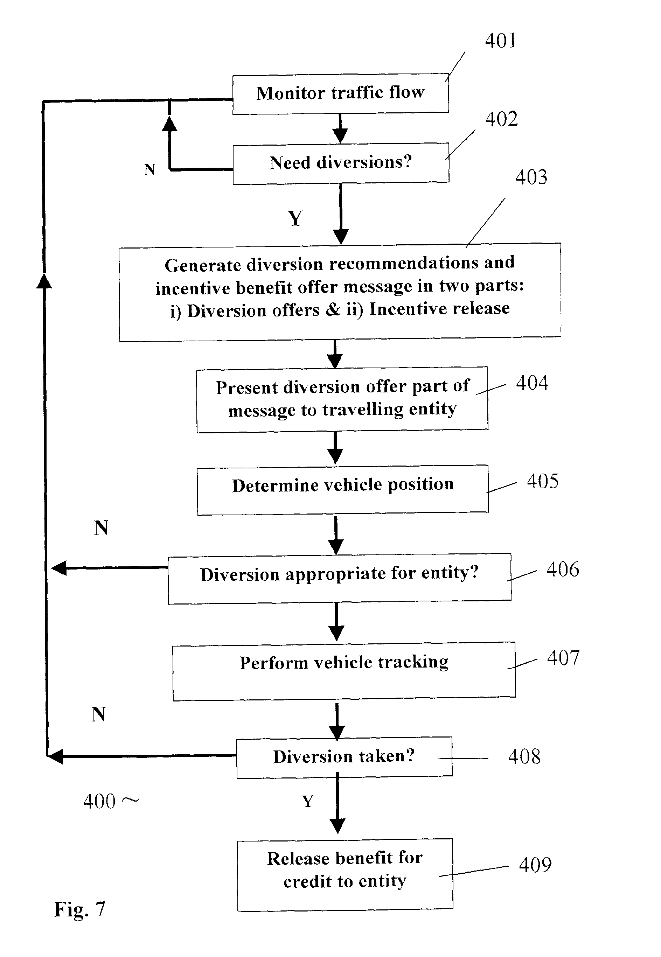

In the case of a vehicle 10 equipped with a navigation system 30 or other means of self tracking, the award and logging of benefits can be performed locally to the vehicle 10. In this case, all the service provider 16 needs to do is supply the diversion and incentive information, for example by RDS/TMC broadcast in two portions of a signal. Preferably the benefit award is coded such that release to the vehicle 10 is only possible on completion of a diversion. Such a scheme is shown as a flow diagram in Figure 7. The steps of Figure 7 are basically identical to those of Figure 6 but the sequence of steps is different. The service provider displays the diversion offer in step 404 but vehicle position detection in step 405 is done in the vehicle.

Inside the vehicle a decision is taken as to whether the diversion is suitable in step 406. The vehicle 10 can use the navigation system 30 to determine whether an offered diversion is useful and release it to the user. This can be done by the driver of the vehicle or even automatically when the vehicle has a route planner. The tracking of the vehicle in step 407 can also be done by the vehicle and a diversion ticket generated to indicate that the diversion has been taken which can be used later to verify that the diversion was taken. The navigation system 30 can determine automatically whether any of the diversions have been taken and can be used in conjunction with the traffic management interface 14 to claim and log the benefit in-vehicle. The user interface 22 is useful to allow a user to select one of the diversions offered for programming into the navigation system 30 so that detailed information of the suggested route is made available. After such a proof the incentive benefit can be provided in step 409. Benefits can be redeemed, for example, by downloading from the navigation system 30 and/or traffic management interface 14.

In this manner, the system is embodied in a non-centric format, saving valuable resource at the service provider 16 who no longer needs to track the vehicles nor even know who or where they are or even if they are participating in the incentive scheme. The service provider 16 merely supplies diversion offers and associated benefits. In this manner, a non-centralized incentive scheme can be implemented automatically and in-vehicle, with or without driver interaction and consuming minimal extra communication resource. It may be considered preferable to eliminate the option of driver interaction whilst moving, for improved safety.

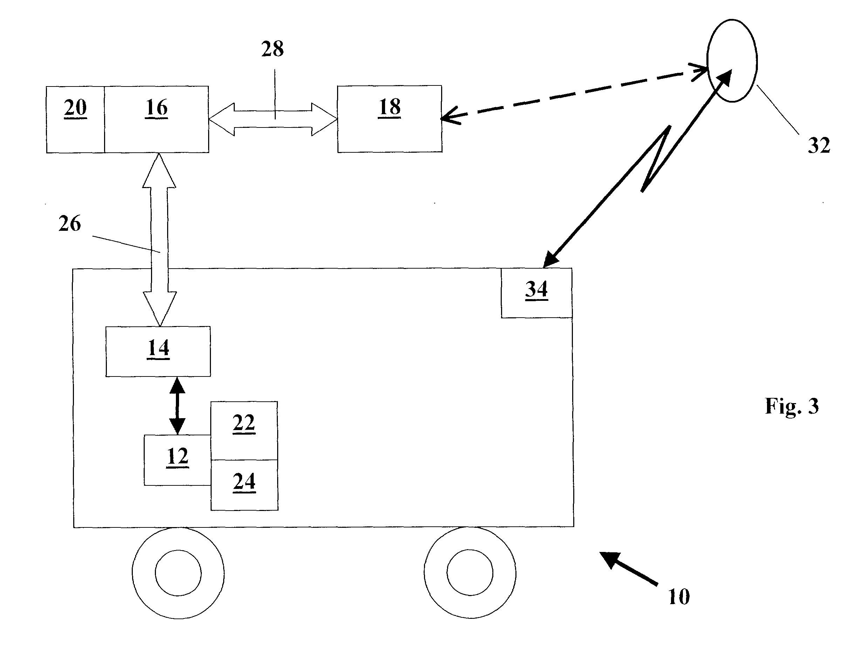

Referring now to Figure 3 in particular, a third aspect of the present invention is disclosed in which no navigation system 30 is provided and tracking is instead performed using another device 34. This device 34 may comprise a device personal to a user and capable of communication, such as for example a mobile communication device like a cellular telephone. Tracking such devices is known and allows tracking of the vehicle 10 through its user, thus allowing more accurate crediting of benefits against an individual who regularly changes vehicles or grouping the accumulation of benefits by people who share the same device 34. Furthermore, the tracked device 34 can then be used to store the accumulation of benefits locally in addition to or instead of central control 20.

A very simple tracked device 34 might comprise a vehicle specific passive transponder or smart card. These devices could be read by for example overhead gantries or toll booth readers and used to determine the instantaneous position of the vehicle and in some cases, e.g. the smart card, could be used to store the accumulation of benefits. A simpler version might be a marker such as a bar code sticker, although it will be appreciated that such a device 34 might merely identify the vehicle 10 and be less useful for active purposes such as benefit storage.

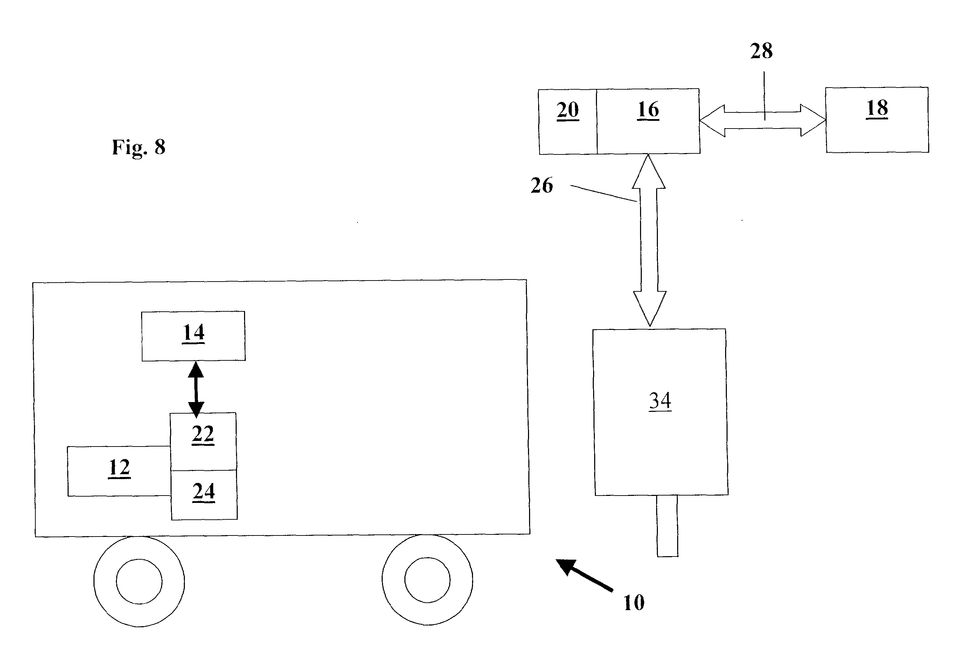

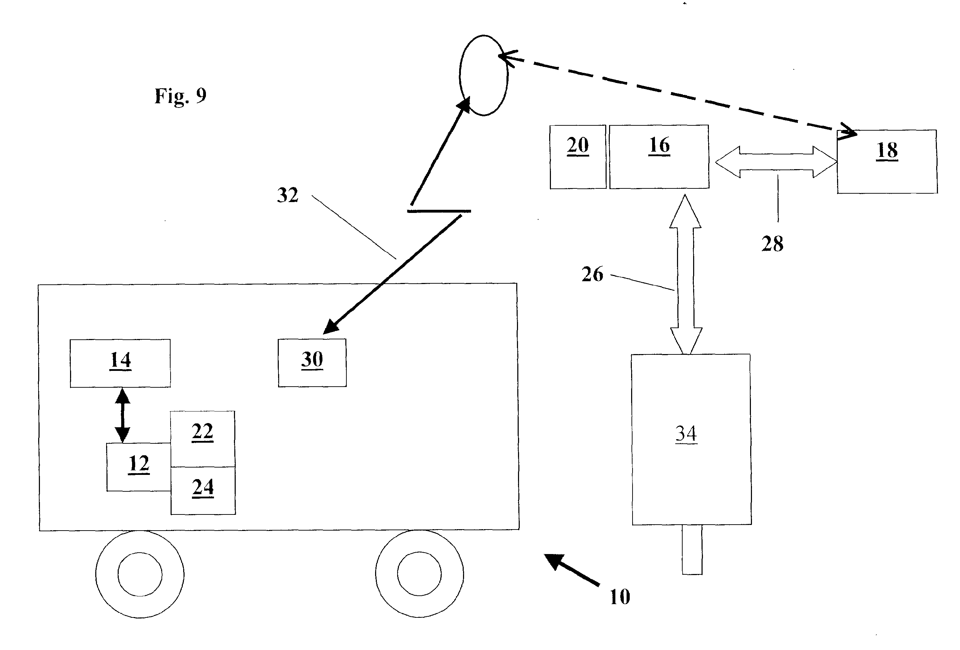

Figures 8 and 9 show two further embodiments of the present invention using adaptable signs 34. Reference numbers in Figures 8 and 9 which are the same as in Figures 1 to 4 refer to the same components. The service provider 16 displays diversion information by means of an adaptable display unit 34 which may be located at suitable positions on the motorway, e.g. on overhead gantries or alongside the road. The driver seeing the offered diversion may enter a name or code for the diversion in the user input device 22. the diversion code or number can be displayed on the display unit 34 with the diversion information. Optionally, the fact that a driver has accepted a diversion may be transmitted to the service provider 16 via a suitable link with interface 14, e.g. via a mobile radio telecommunications network such as GSM. Optionally, the acceptance of the diversion may be stored in local storage device 24. In order to be certain that a diversion has been taken the driver may be required to enter a second code on re-joining the motorway - this new code being displayed at the entry point on a further display unit 34.

Figure 9 shows a modification of Figure 8 in which the vehicle 10 can be tracked by a suitable system 32, e.g. by a satellite tracking system such Eutelsat. In this way the behavior of the vehicle can be tracked and a confirmation obtained that the diversion has been taken. Alternatively, if the system 32 is a global positioning system details of the position of the vehicle may be transmitted with the acceptance of the diversion input on interface 22 to the provider 16 via a suitable communication means. Alternatively, the global positioning system may be used to log the position of the vehicle on acceptance in the vehicle itself, e.g. in the memory 24.

It is likely that an incentive scheme such as that of the present invention may attract attempted fraud and due consideration should be given to implementing one or more countermeasures beyond those discussed above

One such measure against fraud may include embedding in the scheme entry conditions a requirement to submit to the service provider a route plan before setting out. Benefits could then be refused or limited if the entity departed from the intended route plan, so as for example to find an area where diversions were being offered, or if the journey is commenced only after an offer of a diversion has been made or necessitated.

A further measure against fraud is to award no or reduced benefits unless the travelling entity is already approaching an actual or potential diversion before an offer of a benefit is necessitated or made.

Benefits should also be reduced or not awarded if repeat approach is made to an area where the relevant travelling entity has previously been awarded a benefit, so as to prevent participants simply going out to find a diversion and coming back several times. Consideration should also be given to applying punitive measures against attempted or successful fraud, such as for example permanently or temporarily excluding a travelling entity or user from the incentive scheme or debiting/canceling under predetermined circumstances benefits already accumulated.

With the use of vehicle tracking in particular, it is relatively easy to establish a travel pattern for a travelling entity. If such a pattern is indicative of, for example, usage designed to maximize benefit accumulation rather than efficient travel, punitive action could be taken as discussed above.

While the present invention has been shown and described with reference to preferred embodiments, it will be understood by those skilled in the art that various changes or modifications in form and detail may be made without departing from the scope and spirit of this invention.

## Claims

1. A traffic management system for a travelling traffic entity (10) associated with a user, the system comprising:
travel information means (16, 18) which determines traffic information (28) present on one or more routes in a geographic area,
means (16) for providing to the travelling traffic entity under predetermined conditions a representation of one or more options for route diversion, and
control means (12, 14, 16) for implementing an incentive scheme, under which incentive scheme one of said travelling traffic entity and said user thereof is credited with a benefit if said travelling traffic entity commits to a route including a diversion defined by said representation.

2. A system according to claim 1, wherein the travel information means (16, 18) determines information (30, 32, 34) about a journey of said travelling traffic entity (10).

3. A system according to claim 1 or 2, wherein a said representation is provided to at least one of said travelling traffic entity (10) and a said user by means of an offer message to a message center (12), said offer message including indications of at least one diversion and the or each associated said incentive.

4. A system according to any preceding claim, further comprising a tracking means (30, 32, 34) which is adapted to track whether and/or to what extent the travelling traffic entity (10) executes a provided diversion, which tracking means preferably communicates with said control means (16) such that a said benefit is credited only if predetermined conditions embedded in said incentive scheme surrounding the taking of a said diversion can be tracked as having been met.

5. A system according to claim 4, wherein said tracking means (30, 32, 34) comprises a vehicle position location arrangement.

6. A system according to claim 4 or claim 5, wherein said control means (16) compares the location of said travelling traffic entity (10) with at least one provided diversion and access to said incentive scheme is only permitted if predetermined conditions matching said travelling traffic entity to said diversion are met.

7. A system according to any preceding claim, wherein a record of accumulated said benefits is recorded in at least one of said travelling traffic entity (10, 24), centrally such as at a provider of said incentive scheme (16, 20) or by communication between said control means (16, 32) and a storage means personal to a said user (34), such as in a smart card, personal data/computing device or cellular telephone.

8. A method of controlling traffic flow, including:
a) determining when diverting a travelling traffic entity (10) within a geographic area will improve a traffic situation,;
b) determining one or more route diversions appropriate to improving said traffic situation;
c) providing to a travelling traffic entity or a user thereof a first representation of one or more route diversions;
d) awarding to said travelling traffic entity or said user thereof a benefit if the travelling traffic entity commits to a diversion of the one or more diversions described by said first representation; and
e) storing in a memory device (12, 20, 30) a second representation relating to the award of a said benefit, said memory device preferably comprising a non-volatile memory device.

9. A method according to claim 8, including transmitting one or more offer messages including at least said first representation to said travelling traffic entity.

10. A method according to claim 9, including determining the location of said travelling traffic entity (10) and releasing a said offer message, or stored part thereof, to said travelling traffic entity or the user thereof only if there is a predetermined match between the first representation of a diversion and a position of said travelling traffic entity.
